# EUROPEAN PATENT APPLICATION

(11) **EP 2 675 122 A1**
(43) Date of publication of application: **18.12.2013**
(21) Application number: 13170598.0
(22) Date of filing: 05.06.2013
(51) Int. Cl.: H04L 12/58

(54) **Method and system for retrieving instant voice message, user equipment, and server**

(30) Priority: 14.06.2012 CN 201210196530
(71) Applicant: Huawei Technologies Co., Ltd., Longgang District, Shenzhen Guangdong 518129 (CN)
(72) Inventor: Tang, Jingen, 518129 Shenzhen (CN)
(74) Representative: Goddar, Heinz J.

(57) **Abstract**

Embodiments of the present invention provide a method and a system for retrieving an instant voice message, a user equipment, and a server. The method includes: receiving a retrieval request message sent by a user equipment; acquiring, according to a user identifier, a first text content identifier list corresponding to voice content sent and/or received by a user identified by the user identifier; sending a retrieval keyword and the first text content identifier list to a content retrieval device; receiving a retrieval result returned by the content retrieval device; searching, according to the retrieval result, for voice content corresponding to a second text content identifier list; and returning the voice content corresponding to the second text content identifier list to the user equipment. In the embodiments of the present invention, the method and the system for retrieving an instant voice message, the user equipment, and the server improve user experience and facilitate management and retrieval of content of a voice communication service.

## Description

### TECHNICAL FIELD

Embodiments of the present invention relate to the field of mobile communications technologies, and in particular, to a method and a system for retrieving an instant voice message, a user equipment, and a server.

### BACKGROUND

With the popularization of smartphones and rapid development of mobile instant communications, Whatsapp, MeTalk, WeChat, and the like that provide mobile instant communications all provide voice communication services. That is, a user can record a voice on a user equipment, such as a smartphone, and sends the voice to a receiver so that the voice can be played on a user equipment of the receiver.

The voice communication function is practical and provides a good communications manner for a scenario in which it is inconvenient for a user to input a word, and the like. However, an existing voice communication service has one major defect, that is, the user cannot search for historical voice content.

### SUMMARY

Embodiments of the present invention provide a method and a system for retrieving an instant voice message, a user equipment, and a server to facilitate a user in retrieving content of a voice communication service.

In a first aspect, an embodiment of the present invention provides a method for retrieving an instant voice message, including:
receiving a retrieval request message sent by a user equipment, where the retrieval request message includes a retrieval keyword and a user identifier;
acquiring, according to the user identifier, a first text content identifier list corresponding to voice content sent and/or received by a user corresponding to the user identifier;
sending the retrieval keyword and the first text content identifier list to a content retrieval device;
receiving a retrieval result returned by the content retrieval device, where the retrieval result includes a second text content identifier list corresponding to text content that includes the retrieval keyword;
searching, according to the retrieval result, for voice content corresponding to the second text content identifier list; and
returning the voice content corresponding to the second text content identifier list to the user equipment.

In a second aspect, an embodiment of the present invention provides a method for retrieving an instant voice message, including:
receiving a retrieval request submitted by a user, where the retrieval request includes a retrieval keyword and a user identifier;
acquiring, according to the user identifier, a first text content identifier list corresponding to voice content sent and/or received by the user;
searching, according to the retrieval keyword and the first text content identifier list, for a second text content identifier list corresponding to text content that includes the retrieval keyword;
searching, according to the second text content identifier list, for voice content corresponding to the second text content identifier list; and
displaying the voice content corresponding to the second text content identifier list to the user.

In a third aspect, an embodiment of the present invention provides a server, including:
a first receiving module, configured to receive a retrieval request message sent by a user equipment, where the retrieval request message includes a retrieval keyword and a user identifier;
a first acquiring module, configured to acquire, according to the user identifier, a first text content identifier list corresponding to voice content sent or received by a user corresponding to the user identifier;
a first sending module, configured to send the retrieval keyword and the first text content identifier list to a content retrieval device;
a second receiving module, configured to receive a retrieval result returned by the content retrieval device, where the retrieval result includes a second text content identifier list corresponding to text content that includes the retrieval keyword;
a second acquiring module, configured to search, according to the retrieval result, for voice content corresponding to the second text content identifier list; and
a second sending module, configured to return the voice content corresponding to the second text content identifier list to the user equipment.

In a fourth aspect, an embodiment of the present invention provides a system for retrieving an instant voice message, including:
the server and the content retrieval device, where the content retrieval device is configured to receive a retrieval keyword and a first text content identifier list that are sent by the server and acquire a retrieval result according to the retrieval keyword and the first text content identifier list, and the retrieval result includes a second text content identifier list corresponding to text content that includes the retrieval keyword.

In a fifth aspect, an embodiment of the present invention provides a user equipment, including:
a first receiving module, configured to receive a retrieval request submitted by a user, where the retrieval request includes a retrieval keyword and a user identifier;
a first acquiring module, configured to acquire, according to the user identifier, a first text content identifier list corresponding to voice content sent or received by the user;
a second acquiring module, configured to search, according to the retrieval keyword and the first text content identifier list, for a second text content identifier list corresponding to text content that includes the retrieval keyword;
a third acquiring module, configured to search, according to the second text content identifier list, for voice content corresponding to the second text content identifier list; and
a displaying module, configured to display the voice content corresponding to the second text content identifier list to the user.

Embodiments of the present invention provide a method and a system for retrieving an instant voice message, a user equipment, and a server. In a voice communication service, an IM server receives voice content sent and received by a user equipment; the voice content is converted into corresponding text content, the text content is stored, and a mapping between the voice content and the text content and mappings between the voice content and a sender user and a receiver user are established; when a user retrieves voice content sent or received by the user, text content corresponding to the voice content received or sent by the user is firstly acquired by using a text content querying manner and then voice content corresponding to the text content is acquired according to the text content. By using the technical solutions provided in the embodiments of the present invention, a user is capable of retrieving a voice instant message sent or received by the user and therefore user experience is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a flowchart of a method for retrieving an instant voice message according to an embodiment of the present invention;

FIG. 2 is a flowchart of another method for retrieving an instant voice message according to an embodiment of the present invention;

FIG. 3 is a flowchart according to a first embodiment of the present invention;

FIG. 4 is a flowchart according to a second embodiment of the present invention;

FIG. 5 is a flowchart according to a third embodiment of the present invention;

FIG. 6 is a flowchart according to a fourth embodiment of the present invention;

FIG. 7 is a flowchart according to a fifth embodiment of the present invention;

FIG. 8 is a schematic structural diagram of a server according to an embodiment of the present invention;

FIG. 9 is a schematic structural diagram of another server according to an embodiment of the present invention;

FIG. 10 is a schematic structural diagram of a system for retrieving an instant voice message according to an embodiment of the present invention;

FIG. 11 is a schematic structural diagram of another system for retrieving an instant voice message according to an embodiment of the present invention;

FIG. 12 is a schematic structural diagram of a user equipment according to an embodiment of the present invention; and

FIG. 13 is a schematic structural diagram of another user equipment according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

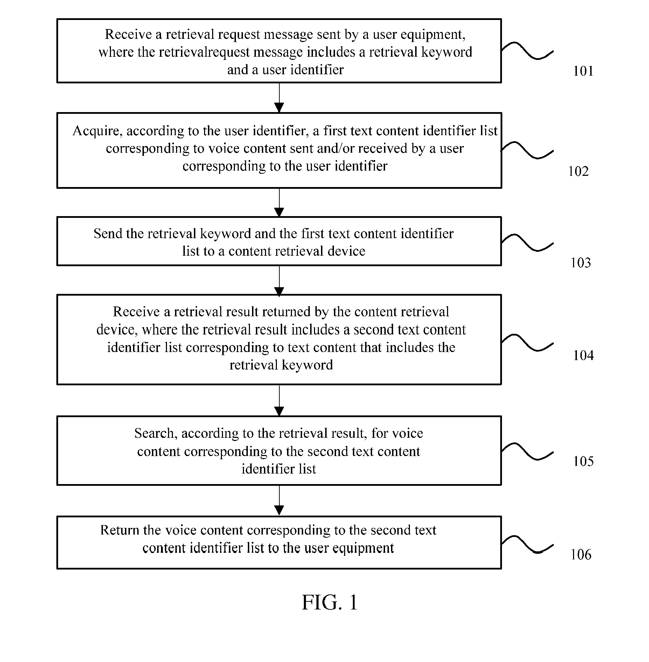

FIG. 1 is a flowchart of a method for retrieving an instant voice message according to an embodiment of the present invention. As shown in FIG. 1, in a mobile instant communications service, the method for retrieving an instant voice message includes:

Step 101: Receive a retrieval request message sent by a user equipment, where the retrieval request message includes a retrieval keyword and a user identifier.

Before step 101, the method further includes:
receiving voice content sent and/or received by the user equipment;
sending the voice content to a voice conversion device;
receiving text content that corresponds to the voice content and is returned by the voice conversion device and then sending the text content to a content monitoring device, so that the content monitoring device performs filtering or reviewing for the text content; receiving a filtering or reviewing result returned by the content monitoring device; and sending voice content corresponding to the text content that passes the filtering or reviewing to a user equipment of a receiver; and
assigning an identifier for the text content, storing the text content and the voice content, and recording a mapping between the voice content and the text content, where the mapping is an association between a voice content identifier and a text content identifier; recording a mapping between the text content identifier and a user identifier of a user that sends and/or receives the voice content; and sending the text content to a content retrieval device so that the content retrieval device establishes a content index according to the text content.

The retrieval method further includes: receiving a text content query request message sent by the user equipment, where the text content query request message carries the voice content identifier; searching, according to the voice content identifier, for the text content identifier corresponding to the voice content identifier and corresponding text content; sending the text content and the text content identifier to the user equipment; receiving the text content identifier and corrected text content that are returned by the user equipment; updating the stored text content to the corrected text content according to the text content identifier, and sending the text content identifier and the corrected text content to the content retrieval device, so that the content retrieval device updates the content index according to the corrected text content.

Step 102: Acquire, according to the user identifier, a first text content identifier list corresponding to voice content sent and/or received by a user corresponding to the user identifier.

Step 103: Send the retrieval keyword and the first text content identifier list to the content retrieval device.

Step 104: Receive a search result returned by the content retrieval device, where the retrieval result includes a second text content identifier list corresponding to text content that includes the retrieval keyword.

Step 105: Search, according to the retrieval result, for voice content corresponding to the second text content identifier list.

Step 106: Return the voice content corresponding to the second text content identifier list to the user equipment.

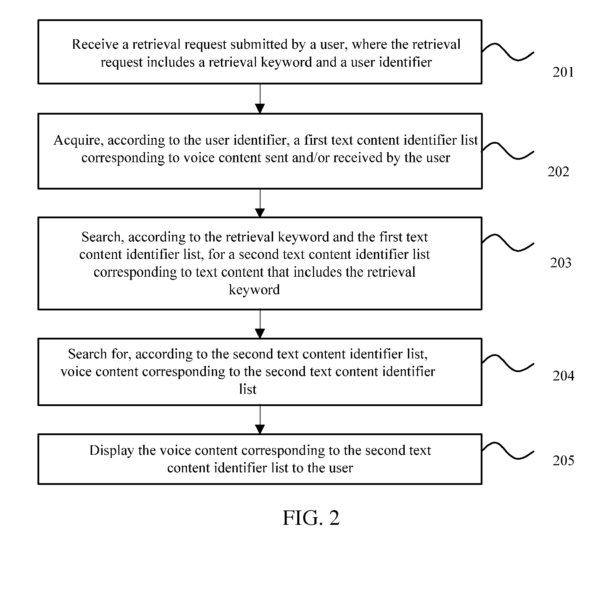

FIG. 2 is a flowchart of another method for retrieving an instant voice message according to an embodiment of the present invention. As shown in FIG. 2, in a mobile instant communications service, the method for retrieving an instant voice message includes:

Step 201: Receive a retrieval request message submitted by a user, where the retrieval request message includes a retrieval keyword and a user identifier.

Before step 201, the method further includes: receiving, from a server, text content corresponding to voice content sent and/or received by the user; assigning a text content identifier for the text content, storing the text content and the voice content, and recording a mapping between the voice content and the text content; and
recording a mapping between the text content identifier and the user identifier.

Step 202: Acquire, according to the user identifier, a first text content identifier list corresponding to the voice content sent and/or received by the user.

Step 203: Search, according to the retrieval keyword and the first text content identifier list, for a second text content identifier list corresponding to text content that includes the retrieval keyword.

Step 204: Search, according to the second text content identifier list, for voice content corresponding to the second text content identifier list.

Step 205: Display the voice content corresponding to the second text content identifier list to the user.

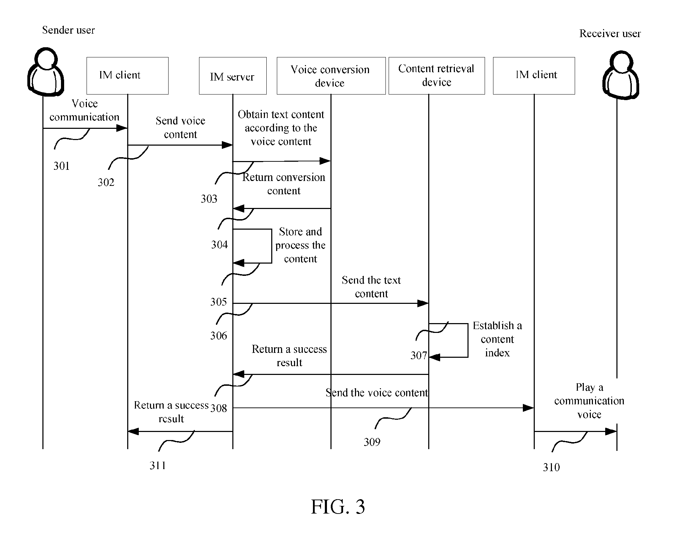

FIG. 3 is a flowchart according to a first embodiment of the present invention. The following describes in detail a flow for sending and processing a voice for a user with reference to FIG. 3. As shown in FIG. 3, the flow includes the following steps:

Step 301: A sender user uses a voice communication function of a mobile IM client to make a voice.

Step 302: The mobile IM client (IM client software installed on a sender device) records voice content and sends the voice content to an IM server. The IM server receives the voice content.

Step 303: The IM server invokes a voice conversion device and obtains text content according to the voice content and the voice conversion device is responsible for converting communication voice content of a user to text content.

Step 304: The voice conversion device returns converted content to the IM server.

Step 305: After receiving and obtaining corresponding text content, the IM server performs content storing and processing, stores the voice content and the corresponding text content, establishes mappings between the voice content and the text content and between the voice content and a sender user and a receiver user, where the established mappings between the voice content and the text content and between the voice content and the sender user and the receiver user include the association between a text content identifier and a sender identifier and the association between the text content identifier and a receiver identifier. The IM server needs to assign a new text content identifier to text content converted by the voice conversion device and needs to maintain the association between the text content identifier and voice content identifier of the sender.

Step 306: The IM server sends the text content to a content retrieval device.

Step 307: The content retrieval device establishes a content index according to the text content, where the content index includes the text content identifier and a keyword abstracted from the text content.

Step 308: The content retrieval device returns a success result to the IM server.

Step 309: The IM server sends the voice content to the mobile IM client (receiver).

Step 310: Then the IM client (receiver) plays a communication voice to the receiver user.

Step 311: The IM server returns a success result to the sender.

In this embodiment of the present invention, a content index is established in a content retrieval device so that both a sender user and a receiver user are capable of retrieving voice content. Specifically, voice content retrieval on an IM server for a user includes the following steps:

The IM server receives a retrieval request submitted by the user, where the retrieval request includes a retrieval keyword and a user identifier.

The IM server acquires, according to the user identifier, a first text content identifier list corresponding to voice content sent and/or received by the user. The IM server searches, according to the retrieval keyword and the first text content identifier list, for a second text content identifier list corresponding to text content that includes the retrieval keyword.

The IM server searches, according to the second text content identifier list, for voice content corresponding to the second text content identifier list.

The IM server displays the voice content corresponding to the second text content identifier list to the user.

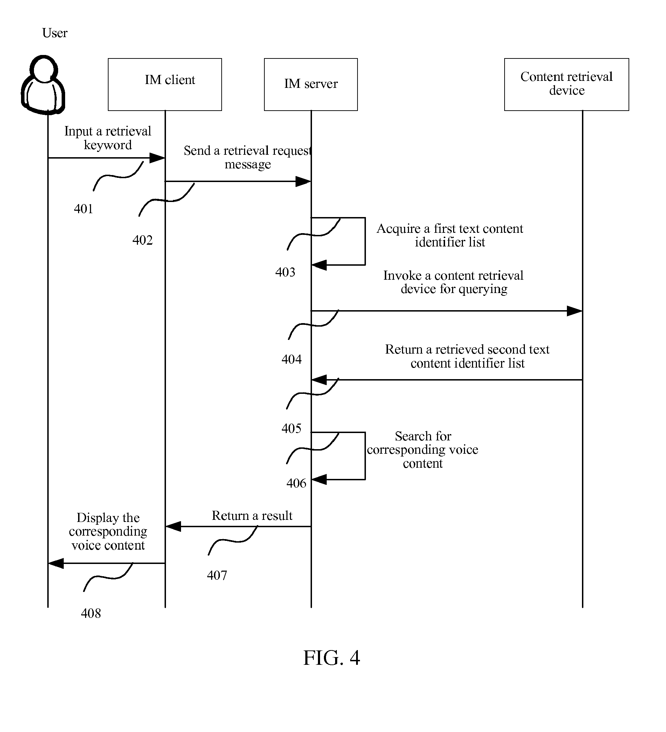

FIG. 4 is a flowchart according to a second embodiment of the present invention. The following describes in detail a voice content retrieval flow on a server for a user according to the method for retrieving an instant voice message in the first embodiment of the present invention with reference to FIG. 4. As shown in FIG. 4, the voice content retrieval flow on the server for the user includes the following steps:

Step 401: The user inputs a retrieval keyword on a mobile IM client.

Step 402: The mobile IM client sends a retrieval request message to an IM server, where the retrieval request message includes the retrieval keyword and a user identifier.

Step 403: The IM server acquires a first text content identifier list, where the first text content identifier list corresponding to voice content sent by a sender user is acquired according to the user identifier of the sender user.

Step 404: The IM server invokes a content retrieval device for querying and the content retrieval device obtains a text content identifier list of hit text content according to the retrieval keyword.

Step 405: The content retrieval device returns a retrieved second text content identifier list, that is, a matched second text content identifier list, to the IM server.

Step 406: The IM server searches for corresponding voice content according to the second text content identifier list of text content that includes the retrieval keyword, that is, determines the corresponding voice content according to the text content identifier and the voice content identifier mapping the text content identifier.

Step 407: The IM server returns a result, that is, returns found voice content to the mobile IM client. Search results are returned in batches if many search results exist.

Step 408: The mobile IM client displays the corresponding voice content to the user.

In this embodiment, steps 403 and 404 are key points of this embodiment of the present invention. Because voice content retrieval for a user is content retrieval in the range of the user, a list of text content identifiers owned by the user needs to be firstly obtained in step 403 and is used as a parameter to invoke an interface of a content retrieval device in step 404, so that the content retrieval device is capable of querying content in a specified range. It should be noted here that if much text content of the user exists, the text content may be processed in batches. That is, each time the content retrieval device is invoked to import a content identifier list with limited items for retrieval.

In the voice retrieval flow, retrieval initiated by a sender user is used as an example. For a receiver user, the flow is similar.

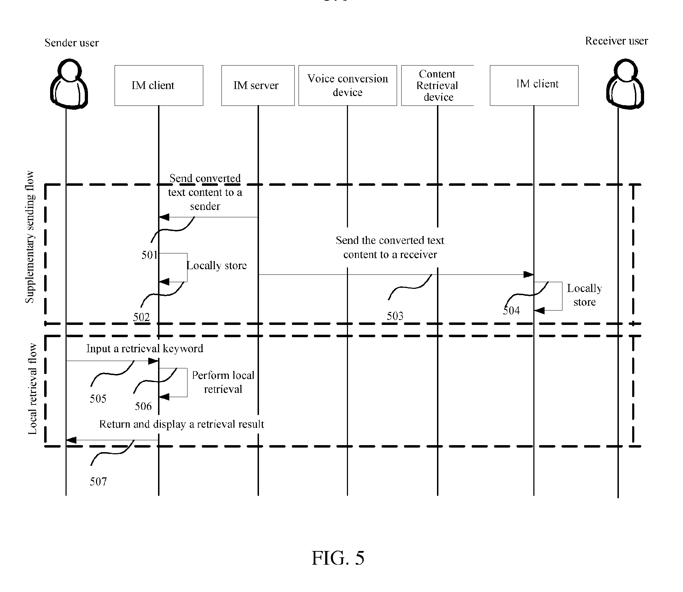

For a local voice content retrieval flow for a user, as shown in FIG. 5, an IM server needs to send text content generated after conversion to a mobile IM client to support local retrieval.

Meanwhile, this flow provides a supplementary flow for "a flow for sending and processing a user's communication voice". For a flow for sending voice content, reference may be directly made to FIG. 3 and details are not repeated herein. The supplementary sending flow is described as follows:

Step 501: The IM server sends the text content generated after conversion to a mobile IM client of a sender.

Step 502: The mobile IM client of the sender locally stores the text content and establishes an association between the text content and original voice content.

Step 503: The IM server sends the text content generated after conversion to a mobile IM client of a receiver.

Step 504: The mobile IM client of the receiver locally stores the text content and establishes an association between the text content and the original voice content.

During actual implementation of this solution, step 503 in the supplementary sending flow may further be combined with "Step 309: The IM server sends the voice content to the mobile IM client (receiver)" in FIG. 3. That is, the voice content and the text content generated after conversion are sent to the IM client in one message.

After voice content is locally stored and an index is established for text content generated by converting voice content, local retrieval may be supported. As shown in FIG. 5, a formal local retrieval flow is as follows:

Step 505: The user inputs a retrieval keyword on the mobile IM client.

Step 506: The mobile IM client performs local retrieval, that is, searches by using a retrieval method the same as that used for retrieving a common IM message text.

Step 507: The mobile IM client returns and displays a retrieval result to the user.

A key point in the flow is as follows: The IM server sends the text content generated after conversion to the mobile IM client, the mobile IM client needs to store the text content by itself and maintain an association between an identifier of the text content generated after conversion and an identifier of the original voice content. The key of the local retrieval flow for the user is to search the text content identifier first and then obtain the associated original voice content.

A local retrieval solution may use a retrieval solution the same as that used for retrieving common IM text content. A solution for retrieving a common IM text does not fall within the scope of the present invention. Generally speaking, a client uses a relatively simple search function to implement local retrieval. For example, text content is stored and queried in a relationship database. Certainly, in actual implementation, a corresponding configuration item may be added for the user to select whether local retrieval needs to be supported. If the user selects that the local retrieval needs to be supported, the IM server sends the text content generated after conversion to the mobile IM client. In the local voice retrieval flow, retrieval initiated by a sender user is used as an example. For a receiver user, the flow is similar.

Because multiple problems, such as accents of different users, a background noise, and an unclear voice, may exist in a user's communication voice, a case such as a conversion recognition error may occur on a voice conversion device. In this case, a feedback correction mechanism needs to be provided to allow the user to correct a voice conversion result and store and retrieve corrected content. This embodiment of the present invention provides a solution for correcting the voice conversion result for the user. The solution is specifically as follows:

The IM server receives a text content query request message sent by a user equipment, where the text content query request message carries a voice content identifier.

The IM server searches for a corresponding text content identifier and corresponding text content according to the voice content identifier.

The IM server sends the text content and the text content identifier to the user equipment.

The IM server receives the text content identifier and corrected text content that are returned by the user equipment.

The IM server updates stored text content to the corrected text content according to the text content identifier and sends the text content identifier and the corrected text content to a content retrieval device, so that the content retrieval device updates a content index according to the corrected text content.

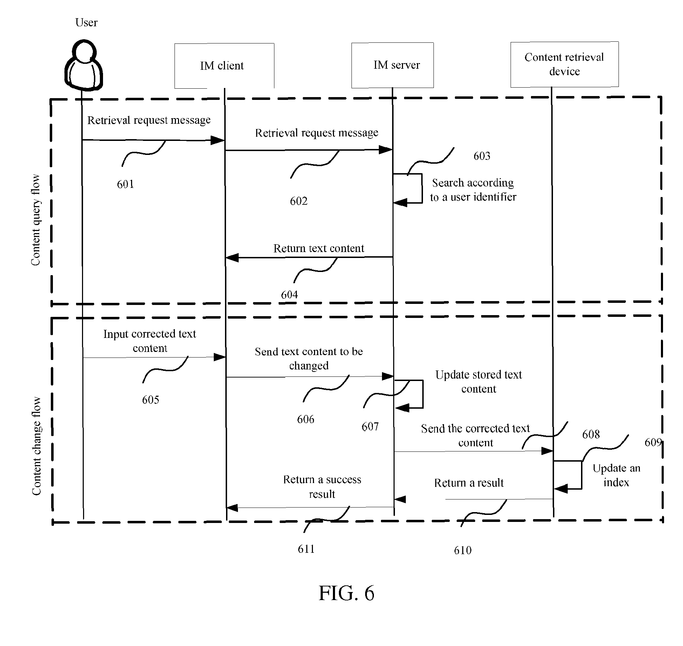

FIG. 6 is a flowchart according to a fourth embodiment of the present invention and provides a solution for correcting a voice conversion result for a user. The following describes in detail a flow of the correction solution with reference to FIG. 6. As shown in FIG. 6, the flowchart of the correction solution includes a content query flow and a content change flow. The content query flow is relatively simple and is as follows:

Step 601: A user submits a retrieval request message, where the retrieval request message includes a retrieval keyword and a user identifier.

Step 602: An IM client sends a retrieval request message to an IM server.

Step 603: The IM server searches according to the user identifier.

Step 604: The IM server returns found text content (with the user identifier). In this flow, the user may view whether the text content generated after conversion is correct and change incorrect text content by using the following content change flow described as follows:

Step 605: The user inputs corrected text content on a mobile IM client.

Step 606: The mobile IM client sends text content to be changed to the IM server, where the text content carries a content identifier.

Step 607: The IM server updates stored text content.

Step 608: The IM server sends corrected text content to a content retrieval device, where the corrected text content carries a content identifier.

Step 609: The content retrieval device updates an index.

Step 610: The content retrieval device returns a result.

Step 611: The IM server returns a success result.

If processing of a value-added service, such as filtering or reviewing of voice content, needs to be implemented, it is required that a sending and processing flow continues to be expanded. This embodiment of the present invention provides a solution for filtering or reviewing the voice content for the user. The solution is specifically as follows:

Before the sending the voice content to a receiver user, the flow further includes:
sending, by the IM server, the text content to a content monitoring device so that the content monitoring device performs filtering or reviewing for the text content; and
receiving, by the IM server, a filtering or reviewing result returned by the content monitoring device; and
the sending the voice content to a receiver user is specifically that the voice content is sent to the receiver user after the filtering or reviewing is passed.

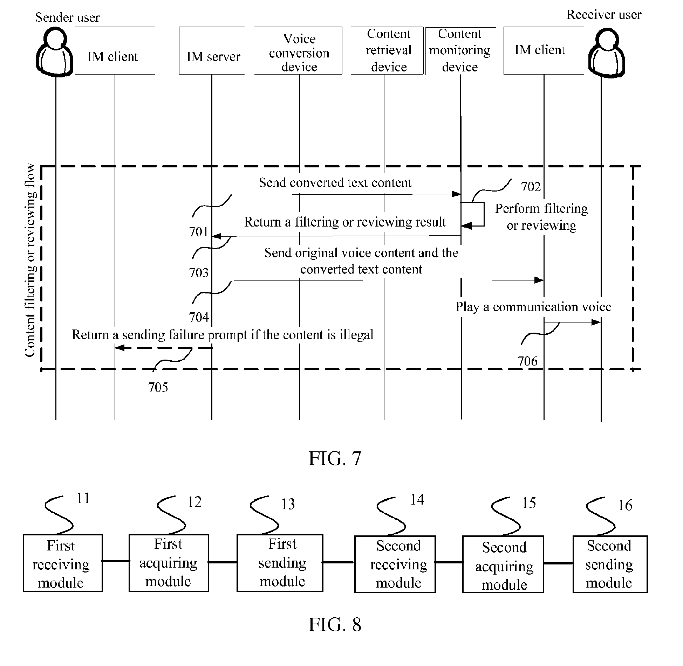

FIG. 7 is a flowchart according to a fifth embodiment of the present invention and provides a flowchart of a solution for filtering or reviewing voice content for a user. The following describes in detail a flow for filtering or reviewing voice content for a user with reference to FIG. 7. As shown in FIG. 7, the flow provides a supplementary flow after the flow, that is, "a flow for sending and processing a user's communication voice" shown in FIG. 3. For a flow for sending the voice content, details are not repeated and reference may be directly made to the flow shown in FIG. 3. A content monitoring device is, for example, a filtering and reviewing server. The content filtering or reviewing flow is described as follows:

Step 701: An IM server sends text content generated after conversion to a filtering and reviewing server.

Step 702: The filtering and reviewing server performs filtering or reviewing for the text content.

Step 703: The filtering and reviewing server returns a filtering or reviewing result to the IM server.

Step 704: If the content is legal, the IM server sends original voice content and the text content generated after conversion to an IM client of a receiver.

Step 705: If the content is illegal, a sending failure prompt (an error prompt of illegal content) is returned to the IM client of the receiver.

Step 706: A mobile IM client of the receiver plays a communication voice to a receiver user.

Persons of ordinary skill in the art may understand that all or a part of the steps in each of the method embodiments may be implemented by a program instructing relevant hardware. The program may be stored in a computer readable storage medium. When the program is run, the steps in the method embodiments are performed. The storage medium may be any medium that is capable of storing program codes, such as a ROM, a RAM, a magnetic disk, or an optical disk.

FIG. 8 is a schematic structural diagram of a server according to an embodiment of the present invention. As shown in FIG. 8, the server includes: a first receiving module 11, configured to receive a retrieval request message sent by a user equipment, where the retrieval request message includes a retrieval keyword and a user identifier;
a first acquiring module 12, configured to acquire, according to the user identifier, a first text content identifier list corresponding to voice content sent or received by a user corresponding to the user identifier;
a first sending module 13, configured to send the retrieval keyword and the first text content identifier list to a content retrieval device;
a second receiving module 14, configured to receive a retrieval result returned by the content retrieval device, where the retrieval result includes a second text content identifier list corresponding to text content that includes the retrieval keyword;
a second acquiring module 15, configured to search, according to the retrieval result, for voice content corresponding to the second text content identifier list; and
a second sending module 16, configured to return the voice content corresponding to the second text content identifier list to the user equipment.

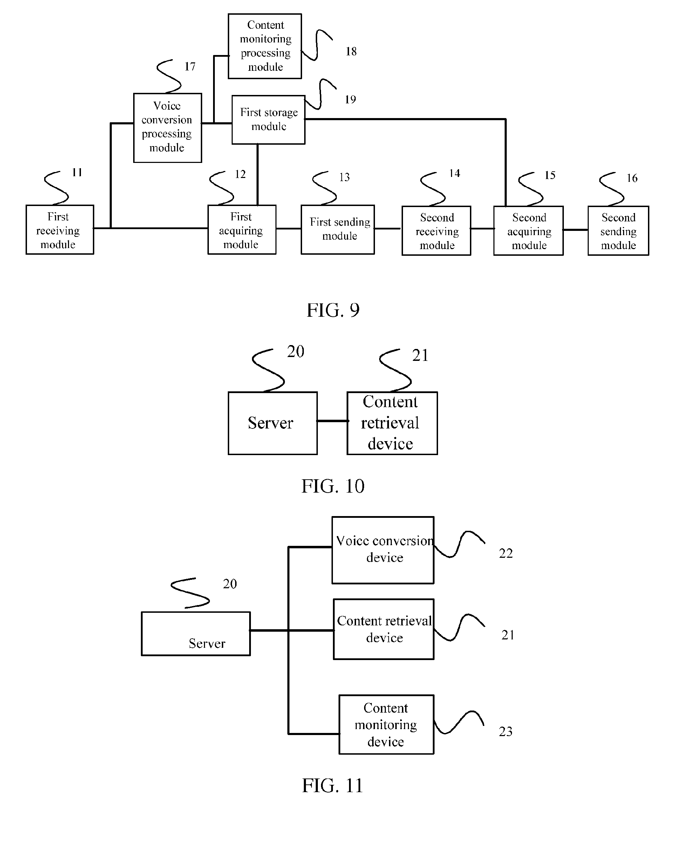

FIG. 9 is a schematic structural diagram of another server according to an embodiment of the present invention. As shown in FIG. 9, the server further includes a voice conversion processing module 17 that is configured to receive, before the retrieval request message sent by the user equipment is received, voice content sent and/or received by the user equipment, send the voice content to a voice conversion device, and receive text content that corresponds to the voice content and is returned by the voice conversion device.

As shown in FIG. 9, the server further includes a first storage module 19 that is configured to assign an identifier to the text content, store the text content and the voice content, record a mapping between the voice content and the text content, and record a mapping between the text content identifier and a user identifier of a user that sends and/or receives the voice content; and the first sending module 13 is further configured to send the text content to a content retrieval device, so that the content retrieval device establishes a content index according to the text content. The mapping between the voice content and the text content is an association between a voice content identifier and a text content identifier. The first receiving module is further configured to receive a text content query request message sent by the user equipment, where the text content query request message carries the voice content identifier; the first storage module 19 is further configured to search, according to the voice content identifier, for the text content identifier corresponding to the voice content identifier and corresponding text content; the second sending module 16 is further configured to send the text content and the text content identifier to the user equipment;
the first receiving module 11 is further configured to receive the text content identifier and corrected text content that are returned by the user equipment; the first storage module 19 is further configured to update stored text content to the corrected text content according to the text content identifier; and the first sending module 13 is further configured to send the text content identifier and the corrected text content to the content retrieval device, so that the content retrieval device updates the content index according to the corrected text content.

As shown in FIG. 9, the server further includes a content monitoring processing module 18 that is configured to send the text content to the content monitoring device after the text content that corresponds to the voice content and is returned by the voice conversion device is received, so that the content monitoring device performs filtering or reviewing for the text content; and receive a filtering or reviewing result returned by the content monitoring device; and the second sending module 16 is specifically configured to send voice content corresponding to the text content that passes the filtering or reviewing to a user equipment of a receiver.

FIG. 10 is a schematic structural diagram of a system for retrieving an instant voice message according to an embodiment of the present invention. As shown in FIG. 10, the system includes a server 20 and a content retrieval device 21. The content retrieval device 21 is configured to receive a retrieval keyword and a first text content identifier list that are sent by the server and acquire a search result according to the retrieval keyword and the first text content identifier list, where the retrieval result includes a second text content identifier list corresponding to text content that includes the retrieval keyword.

FIG. 11 is a schematic structural diagram of another system for retrieving an instant voice message according to an embodiment of the present invention. As shown in FIG. 11, the system further includes a voice conversion device 22 and/or a content monitoring device 23. The voice conversion device 22 is configured to convert voice content into corresponding text content and the content monitoring device 23 is configured to perform filtering or reviewing for the text content.

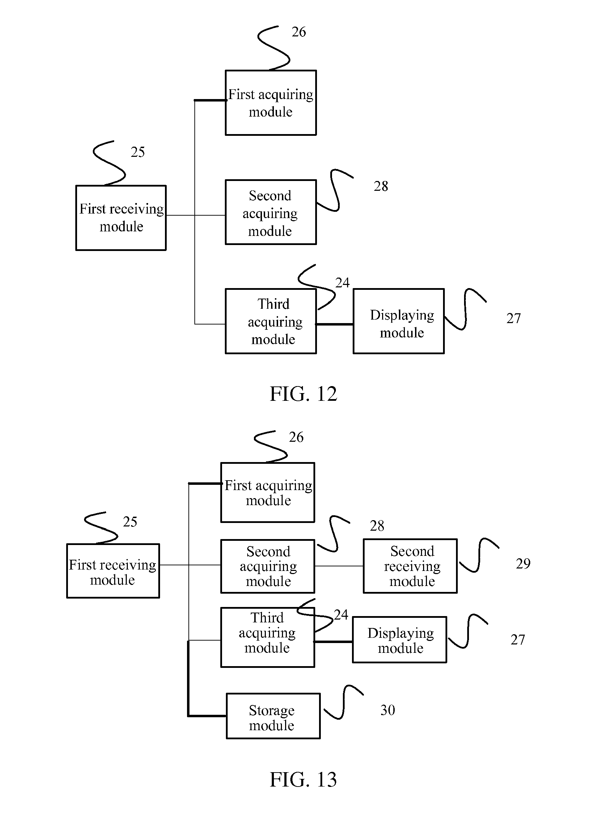

FIG. 12 is a schematic structural diagram of a user equipment according to an embodiment of the present invention. As shown in FIG. 12, the user equipment includes a first receiving module 25, configured to receive a retrieval request submitted by a user, where the retrieval request includes a retrieval keyword and a user identifier; a first acquiring module 26, configured to acquire, according to the user identifier, a first text content identifier list corresponding to voice content sent and/or received by the user; a second acquiring module 28, configured to search, according to the retrieval keyword and the first text content identifier list, for a second text content identifier list corresponding to text content that includes the retrieval keyword; a third acquiring module 24, configured to search, according to the second text content identifier list, for voice content corresponding to the second text content identifier list; and a displaying module 27, configured to display the voice content corresponding to the second text content identifier list to the user.

FIG. 13 is a schematic structural diagram of another user equipment according to an embodiment of the present invention. As shown in FIG. 13, the user equipment further includes a second receiving module 29, configured to receive, from a server, text content corresponding to voice content received and/or sent by a user; and a storage module 30, configured to assign a text identifier for the text content, store the text content and the voice content, record a mapping between the voice content and the text content, and record a mapping between a text content identifier and the user identifier.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all the technical features thereof, without departing from the scope of the technical solutions of the embodiments of the present invention.

## Claims

1. In an IM server, a method for retrieving an instant voice message, comprising:
receiving a retrieval request message sent by a user equipment, wherein the retrieval request message comprises a retrieval keyword and a user identifier;
acquiring, according to the user identifier, a first text content identifier list corresponding to voice content sent and/or received by a user corresponding to the user identifier;
sending the retrieval keyword and the first text content identifier list to a content retrieval device;
receiving a retrieval result returned by the content retrieval device, wherein the retrieval result comprises a second text content identifier list corresponding to text content that comprises the retrieval keyword, and the retrieval result searched by the content retrieval device according to the retrieval keyword and the first text content identifier;
searching, according to the retrieval result, for voice content corresponding to the second text content identifier list; and
returning the voice content corresponding to the second text content identifier list to the user equipment.

2. The method for retrieving an instant voice message according to claim 1, before the receiving a retrieval request message sent by a user equipment, further comprising:
receiving voice content sent and/or received by the user equipment;
sending the voice content to a voice conversion device; and
receiving text content that corresponds to the voice content and is returned by the voice conversion device.

3. The method for retrieving an instant voice message according to claim 2, further comprising:
assigning an identifier for the text content, storing the text content and the voice content, and recording a mapping between the voice content and the text content; and
recording a mapping between the text content identifier and a user identifier of a user that sends and/or receives the voice content.

4. The method for retrieving an instant voice message according to claim 3, further comprising:
sending the text content to the content retrieval device so that the content retrieval device establishes a content index according to the text content.

5. The method for retrieving an instant voice message according to claim 3, wherein the mapping between the voice content and the text content is an association between a voice content identifier and the text content identifier, and the method further comprises:
receiving a text content query request message sent by the user equipment, wherein the text content query request message carries the voice content identifier;
searching, according to the voice content identifier, for a text content identifier corresponding to the voice content identifier and corresponding text content;
sending the text content and the text content identifier to the user equipment;
receiving the text content identifier and corrected text content that are returned by the user equipment; and
updating stored text content to the corrected text content according to the text content identifier and sending the text content identifier and the corrected text content to the content retrieval device, so that the content retrieval device updates a content index according to the corrected text content.

6. The method for retrieving an instant voice message according to claim 2, after the receiving text content that corresponds to the voice content and is returned by the voice conversion device, further comprising:
sending the text content to a content monitoring device so that the content monitoring device performs filtering or reviewing for the text content;
receiving a filtering or reviewing result returned by the content monitoring device; and
sending voice content corresponding to the text content that passes the filtering or reviewing to a user equipment of a receiver.

7. In an IM client device, a method for retrieving an instant voice message, comprising:
receiving a retrieval request message submitted by a user, wherein the retrieval request message comprises a retrieval keyword and a user identifier;
acquiring, according to the user identifier, a first text content identifier list corresponding to voice content sent and/or received by the user;
searching, according to the retrieval keyword and the first text content identifier list, for a second text content identifier list corresponding to text content that comprises the retrieval keyword;
searching, according to the second text content identifier list, for voice content corresponding to the second text content identifier list; and
displaying the voice content corresponding to the second text content identifier list to the user.

8. The method for retrieving an instant voice message according to claim 7, further comprising:
receiving, from a server, text content corresponding to the voice content sent and/or received by the user; assigning a text content identifier for the text content, storing the text content and the voice content, and recording a mapping between the voice content and the text content; and
recording a mapping between the text content identifier and the user identifier.

9. A server, comprising:
a first receiving module, configured to receive a retrieval request message sent by a user equipment, wherein the retrieval request message comprises a retrieval keyword and a user identifier;
a first acquiring module, configured to acquire, according to the user identifier, a first text content identifier list corresponding to voice content sent or received by a user corresponding to the user identifier;
a first sending module, configured to send the retrieval keyword and the first text content identifier list to a content retrieval device;
a second receiving module, configured to receive a retrieval result returned by the content retrieval device, wherein the retrieval result comprises a second text content identifier list corresponding to text content that comprises the retrieval keyword, and the retrieval result searched by the content retrieval device according to the retrieval keyword and the first text content identifier;
a second acquiring module, configured to search, according to the retrieval result, for voice content corresponding to the second text content identifier list; and
a second sending module, configured to return the voice content corresponding to the second text content identifier list to the user equipment.

10. The server according to claim 9, further comprising:
a voice conversion processing module, configured to receive, before the retrieval request message sent by the user equipment is received, voice content sent and/or received by the user equipment; send the voice content to a voice conversion device; and receive text content that corresponds to the voice content and is returned by the voice conversion device.

11. The server according to claim 10, further comprising:
a first storage module, configured to assign an identifier for the text content, store the text content and the voice content, and record a mapping between the voice content and the text content; and record a mapping between the text content identifier and a user identifier of a user that sends and/or receives the voice content.

12. The server according to claim 11, wherein the first sending module is further configured to send the text content to the content retrieval device so that the content retrieval device establishes a content index according to the text content.

13. The server according to claim 11, wherein the mapping between the voice content and the text content is an association between a voice content identifier and the text content identifier, the first receiving module is further configured to receive a text content query request message sent by the user equipment, and the text content query request message carries the voice content identifier;
the first storage module is further configured to search, according to the voice content identifier, for a text content identifier corresponding to the voice content identifier and corresponding text content;
the second sending module is further configured to send the text content and the text content identifier to the user equipment;
the first receiving module is further configured to receive the text content identifier and corrected text content that are returned by the user equipment;
the first storage module is further configured to update stored text content to the corrected text content according to the text content identifier; and
the first sending module is further configured to send the text content identifier and the corrected text content to the content retrieval device, so that the content retrieval device updates a content index according to the corrected text content.

14. The server according to claim 10, further comprising:
a content monitoring processing module, configured to send the text content to a content monitoring device after the text content that corresponds to the voice content and is returned by the voice conversion device is received, so that the content monitoring device performs filtering or reviewing for the text content; and receive a filtering or reviewing result returned by the content monitoring device; wherein:
the second sending module is specifically configured to send voice content corresponding to the text content that passes the filtering or reviewing to a user equipment of a receiver.

15. A system for retrieving an instant voice message, comprising the server according to any one of claims 9-14 and a content retrieval device, wherein the content retrieval device is configured to receive a retrieval keyword and a first text content identifier list that are sent by the server and acquire a search result according to the retrieval keyword and the first text content identifier list, and the retrieval result comprises a second text content identifier list corresponding to text content that comprises the retrieval keyword.

16. The system for retrieving an instant voice message according to claim 15, further comprising a voice conversion device and/or a content monitoring device, wherein:
the voice conversion device is configured to convert voice content to corresponding text content; and
the content monitoring device is configured to performs filtering or reviewing for the text content.

17. A user equipment, comprising:
a first receiving module, configured to receive a retrieval request submitted by a user, wherein the retrieval request comprises a retrieval keyword and a user identifier;
a first acquiring module, configured to acquire, according to the user identifier, a first text content identifier list corresponding to voice content sent or received by the user;
a second acquiring module, configured to search, according to the retrieval keyword and the first text content identifier list, for a second text content identifier list corresponding to text content that comprises the retrieval keyword;
a third acquiring module, configured to search, according to the second text content identifier list, for voice content corresponding to the second text content identifier list; and
a displaying module, configured to display the voice content corresponding to the second text content identifier list to the user.

18. The user equipment according to claim 17, further comprising:
a second receiving module, configured to receive, from a server, text content corresponding to the voice content sent and/or received by the user; and
a storage module, configured to assign a identifier for the text content, store the text content and the voice content, and record a mapping between the voice content and the text content; and record a mapping between the text content identifier and the user identifier.
